# FASCICULE DE BREVET EUROPEEN

(11) **EP 3 599 403 B1**
(45) Date de publication et mention de la délivrance du brevet: **01.12.2021**
(21) Numéro de dépôt: 19187804.0
(22) Date de dépôt: 23.07.2019
(51) Int. Cl.: F16K 31/53, F16K 37/00, F24F 13/14, F16K 1/22, F16K 1/52, F24F 11/75

(54) **DISPOSITIF DE RÉGLAGE RÉGLABLE DEPUIS UNE PREMIÈRE EXTRÉMITÉ ET UNE SECONDE EXTRÉMITÉ DU DISPOSITIF DE RÉGLAGE**
EINSTELLVORRICHTUNG, DIE VON EINER ERSTEN UND EINER ZWEITEN EXTREMITÄT DIESER EINSTELLVORRICHTUNG AUS REGULIERT WERDEN KANN
ADJUSTMENT DEVICE ADJUSTABLE FROM A FIRST AND A SECOND END OF THE ADJUSTMENT DEVICE

(30) Priorité: 24.07.2018 FR 1856837
(43) Date de publication de la demande: 29.01.2020
(73) Titulaire: ALDES AERAULIQUE, 69200 Venissieux Cedex (FR)
(72) Inventeur: DAMIZET, Patrick, 42410 LA CHAPELLE VILLARS (FR); BERTRAN, Fabien, 31000 TOULOUSE (FR); LOIGEROT, Xavier, 69003 LYON (FR)
(74) Mandataire: Germain Maureau

(56) Documents cités:
- EP-A1- 1 881 278
- FR-A1- 3 012 565
- US-A- 3 338 140
- US-A1- 2009 095 106

## Description

L'invention concerne un dispositif de réglage d'un débit de fluide s'écoulant dans un conduit.

Par la suite, dans un souci de clarté, le fluide pris en exemple sera de l'air, le conduit sera donc un conduit dit « aéraulique ». Cependant, un raisonnement identique pourrait être réalisé pour tout fluide circulant dans un conduit.

Les bâtiments recevant des personnes, en particulier les logements ou les locaux tertiaires comme des écoles ou des bureaux, comportent généralement un système de ventilation des différentes pièces, appelé ventilation mécanique contrôlée « VMC », pour renouveler l'air de ces pièces en amenant de l'air extérieur et en extrayant l'air vicié à l'intérieur des locaux. Le renouvellement de l'air des pièces a pour principal objectif d'évacuer des pollutions liées à la présence des occupants, à la présence de matériels ou de machines utilisées dans ses locaux, ainsi que celles émises par le bâtiment lui-même.

Les bâtiments peuvent également comprendre une installation aéraulique de chauffage et/ou de climatisation permettant d'amener un flux d'air dans une pièce de manière à augmenter et/ou diminuer la température de ladite pièce.

Plus généralement, les systèmes de ventilation mécanique contrôlée ou les installations aérauliques de chauffage et/ou de climatisation sont des installations aérauliques dans lesquelles un flux d'air, également appelé débit d'air, est transporté par des conduits aérauliques, formant généralement un réseau aéraulique, entre au moins une entrée et au moins une sortie.

Plus précisément, le conduit aéraulique comprend une face interne délimitant une zone intérieure. La zone intérieure du conduit aéraulique est accessible depuis une extrémité du conduit aéraulique.

Par la suite, on considèrera que le débit d'air est un débit volumique d'air.

Le débit d'air traversant le conduit aéraulique correspond à un volume d'air traversant une surface donnée par unité de temps. On exprime généralement le débit en m³/s. Il varie en fonction de la vitesse de l'air, c'est-à-dire de la pression de l'air, et d'une section de passage du conduit aéraulique, c'est-à-dire une surface interne du conduit aéraulique déterminée transversalement par rapport à un axe d'élongation du conduit aéraulique. Par conséquent, pour une pression donnée, on détermine un débit maximum du conduit aéraulique dépendant de la section de passage. Dans le cas d'un conduit aéraulique tubulaire, la section de passage varie en fonction du diamètre du conduit.

Afin de répartir le débit d'air dans les conduits aérauliques en fonction des besoins de chaque pièce, il est nécessaire de pouvoir régler ledit débit d'air, c'est-à-dire de diminuer le débit maximum d'air traversant le conduit aéraulique jusqu'à une valeur de réglage déterminée.

Il existe une solution connue permettant de régler le débit d'air traversant le conduit aéraulique en modifiant la section de passage du conduit aéraulique.

Par exemple, le document de brevet EP1881278 présente un dispositif conçu pour être introduit dans un conduit aéraulique, comportant un corps tubulaire dans lequel est fixé un clapet de réglage permettant de déterminer la section de passage du flux d'air et un volet de régulation fixé de manière pivotante sur un axe, permettant de maintenir un débit sensiblement identique quelles que soient les variations de pression d'air dans le conduit aéraulique.

Plus précisément, le corps tubulaire comprend une paroi interne délimitant un volume interne et une paroi externe opposée à ladite paroi interne. Un joint d'étanchéité est positionné sur la paroi externe. En outre, le corps tubulaire présente une première extrémité et une seconde extrémité.

Le corps tubulaire permet une tenue mécanique du clapet de réglage et du volet de régulation.

Le clapet de réglage s'étend suivant un plan. Le clapet de réglage a au moins en partie une forme sensiblement identique à la section de passage du conduit aéraulique dans lequel le dispositif est destiné à être inséré. Le clapet de réglage comprend une position pivotante autour d'un axe de réglage et une position fixe dans le dispositif.

Le clapet de réglage est configuré de manière à diminuer au moins partiellement la section de passage dudit conduit aéraulique en fonction du débit souhaité.

Pour régler un débit, un technicien met le clapet de réglage dans la position pivotante et modifie la position du clapet de réglage au moyen d'un élément de réglage, puis le technicien met le clapet de réglage dans la position fixe. Le clapet de réglage est alors fixé dans la position permettant de régler le débit souhaité.

La position du clapet de réglage est modifiée manuellement par un technicien au moyen d'un élément de réglage.

L'élément de réglage comprend une molette de consigne présente sur la paroi externe du corps tubulaire, ladite molette de consigne étant reliée à l'axe de réglage du clapet de réglage. Une modification de la position du clapet de réglage se réalise en tournant la molette de consigne.

L'insertion du dispositif dans le conduit aéraulique est délicat.

En effet, lors de l'insertion, des frottements s'exercent entre le conduit aéraulique et le dispositif de réglage pouvant entrainer un déplacement du joint d'étanchéité sur le corps du dispositif et une dégradation de celui-ci. Il n'y a alors plus un parfait ajustement entre le dispositif et le conduit aéraulique.

On définit qu'une zone en amont du corps tubulaire est une zone comprise entre l'axe de réglage et une première extrémité du corps tubulaire et la zone en aval est une zone comprise entre l'axe de réglage et une seconde extrémité du corps tubulaire.

Le dispositif de réglage comporte un sens de montage, c'est-à-dire que le dispositif est positionné dans un conduit en fonction d'un sens d'écoulement du fluide. Lors d'une insertion dans un conduit, la zone en amont est positionnée en regard d'un flux de fluide, c'est-à-dire que le flux rencontre, dans le sens de l'écoulement, la zone en amont puis la zone en aval du dispositif de réglage.

Lorsque le technicien souhaite modifier le débit d'air traversant le conduit aéraulique, c'est-à-dire lorsque le technicien souhaite modifier la position du clapet de réglage, il doit retirer le dispositif du conduit aéraulique de manière à accéder à l'élément de réglage positionné entre le dispositif et le conduit aéraulique. Il peut ainsi actionner l'élément de réglage puis remettre le dispositif dans le conduit aéraulique.

Ainsi une modification du réglage du clapet de réglage entraine de nombreuses manipulations du dispositif demandant beaucoup de temps, et un risque de dégrader et de mal repositionner le dispositif dans le conduit aéraulique entraînant une diminution de la performance du dispositif.

Une modification du réglage du clapet de réglage entraine également un risque d'erreur dans le sens du montage du dispositif de réglage.

Enfin, le retrait du dispositif peut nécessiter un démontage d'une partie du conduit aéraulique entrainant alors des manipulations supplémentaires de la part du technicien.

Le document US 3,338,140 divulgue une vanne comprenant des organes de commande positionnés dans la zone en aval et dans la zone en amont de ladite vanne.

Le document US 2009/0095106 A1 divulgue un système d'engrenage destiné à être utilisé dans un système de contrôle d'un débit d'air.

L'invention a pour but de remédier à tout ou partie des inconvénients précités en proposant, un dispositif de réglage conçu pour régler un débit de fluide s'écoulant dans un conduit, comprenant un corps dans lequel un clapet de réglage est monté mobile en rotation autour d'un axe de réglage, ledit corps comprenant une zone en amont de l'axe de réglage et une zone en aval opposée à la zone en amont par rapport à l'axe de réglage, caractérisé en ce que l'axe de réglage est équipé de moyens de liaison qui coopèrent avec au moins un premier organe de commande positionné dans la zone en aval et un deuxième organe de commande positionné dans la zone en amont.

Le premier organe de commande et le deuxième organe de commande sont configurés de manière à ce qu'une action sur ledit premier organe de commande ou sur ledit deuxième organe de commande interagisse avec les moyens de liaison afin de modifier une position du clapet de réglage.

Ainsi, avec le dispositif de réglage selon l'invention il est possible de modifier la position du clapet de réglage à partir de la zone en amont et de la zone en aval.

Lorsque le dispositif de réglage est positionné dans le conduit, selon le sens d'écoulement du fluide, le technicien accède aisément, le cas échéant à la zone en amont ou à la zone en aval du dispositif de réglage. Ce faisant, le technicien accède facilement, c'est-à-dire sans devoir extraire le dispositif de réglage du conduit, au premier organe de commande ou au deuxième organe de commande. Le technicien peut ainsi modifier la position du clapet de réglage sans retirer le dispositif de réglage du conduit.

En définitive, la modification du réglage du dispositif de réglage selon l'invention est plus rapide et demande moins de manipulation qu'avec un dispositif de réglage selon l'état de l'art.

Selon une caractéristique de l'invention, les moyens de liaison sont fixés à une première terminaison de l'axe de réglage et/ou à une seconde terminaison de l'axe de réglage.

Selon une caractéristique de l'invention, les moyens de liaison comprennent au moins un élément d'entrainement configuré de manière à entrainer en rotation l'axe de réglage.

L'élément d'entrainement est configuré de manière à entrainer en rotation l'axe de réglage en fonction d'une action appliquée sur le premier organe de commande ou sur le deuxième organe de commande. Ce faisant, l'élément d'entrainement entraine en rotation le clapet de réglage.

Selon une caractéristique de l'invention, l'élément d'entrainement s'étend dans un plan de réglage sensiblement normal à l'axe de réglage.

Selon une caractéristique de l'invention, l'élément d'entrainement est mobile en rotation autour de l'axe de réglage.

Selon une caractéristique de l'invention, l'au moins un élément d'entrainement comprend des crans.

Ainsi les crans déterminent des positions possibles de l'axe de réglage.

Selon une caractéristique de l'invention, l'au moins premier organe de commande et le deuxième organe de commande comprennent chacun un élément d'entrainement complémentaire configuré pour coopérer avec l'élément d'entrainement.

L'élément d'entrainement complémentaire est configuré pour coopérer avec l'élément d'entrainement de manière à ce qu'une action sur le premier organe de commande ou sur le deuxième organe de commande entraine la modification de la position du clapet de réglage.

Selon une caractéristique de l'invention, l'élément d'entrainement complémentaire s'étend dans un plan normal à l'axe de réglage.

Selon une caractéristique de l'invention, l'élément d'entrainement complémentaire du premier organe de commande est relié avec l'élément d'entrainement complémentaire du deuxième organe de commande.

Ainsi une action sur le premier organe de commande entraine en outre une action symétrique sur le deuxième organe de commande.

Le premier organe de commande et le deuxième organe de commande s'étendent dans un même plan normal à l'axe de réglage.

Selon une caractéristique de l'invention, l'élément d'entrainement complémentaire du premier organe de commande et/ou du deuxième organe de commande est mobile en rotation.

Ainsi le premier organe de commande et/ou du deuxième organe de commande est mobile en rotation.

Selon une caractéristique de l'invention, l'élément d'entrainement complémentaire du premier organe de commande et/ou du deuxième organe de commande est mobile en translation.

Selon une caractéristique de l'invention, l'élément d'entrainement complémentaire du premier organe de commande et/ou du deuxième organe de commande comprend une cannelure hélicoïdale.

La cannelure hélicoïdale est configurée pour coopérer avec les crans de l'élément d'entrainement de manière à former un engrenage gauche, c'est-à-dire qu'un axe de rotation de l'élément d'entrainement complémentaire n'est pas dans le même plan qu'un axe de rotation de l'élément d'entrainement, permettant de transmettre un mouvement de l'élément d'entrainement complémentaire à l'élément d'entrainement.

Une rotation de l'élément d'entrainement complémentaire entraine en rotation l'élément d'entrainement.

La rotation de l'élément d'entrainement complémentaire est réalisée suivant un axe sensiblement transversal à l'axe de réglage.

L'élément d'entrainement complémentaire permet également de maintenir l'élément d'entrainement dans une position déterminée après le réglage sans qu'il soit nécessaire de bloquer ledit l'élément d'entrainement.

Selon une caractéristique de l'invention, le premier organe de commande et le deuxième organe de commande comprennent une partie spécifiquement adaptée à une préhension par un technicien.

Selon une caractéristique de l'invention, la partie du premier organe de commande et du deuxième organe de commande forme une molette.

Selon une caractéristique de l'invention, le premier organe de commande et le deuxième organe de commande sont déportés de plusieurs centimètres par rapport à la tige.

Selon une caractéristique de l'invention, le dispositif de réglage comprend au moins un premier indicateur de position positionné dans la zone en aval et un deuxième indicateur de position positionné dans la zone en amont.

Le premier indicateur de position et le deuxième indicateur de position sont configurés de manière à indiquer une position du clapet de réglage. Ainsi, lorsque que le technicien exerce une action sur le premier organe de commande ou sur le deuxième organe de commande, les positions du clapet de réglage et des indicateurs de position sont modifiées.

Lorsque le dispositif de réglage est positionné dans le conduit, selon le sens d'écoulement du fluide, le technicien accède aisément, le cas échéant à la zone en amont ou à la zone en aval du dispositif de réglage. Ce faisant, le technicien peut visualiser facilement, c'est-à-dire sans devoir extraire le dispositif de réglage du conduit, la position du premier indicateur de position ou du deuxième indicateur de position.

Selon une caractéristique de l'invention, Le premier indicateur de position et le deuxième indicateur de position s'étendent dans un plan normal à l'axe de réglage.

Selon une caractéristique de l'invention, l'au moins premier indicateur de position et le deuxième indicateur de position comprennent chacun une élongation.

Selon une caractéristique de l'invention, l'élongation de l'élongation l'au moins premier indicateur de position et/ou du deuxième indicateur de position comprend un évidement oblong.

Selon une caractéristique de l'invention, le clapet de réglage comprend au moins un indicateur de position complémentaire configuré de manière à coopérer avec une élongation.

Ainsi l'élongation est configurée pour coopérer avec l'indicateur de position complémentaire du clapet de réglage.

Un mouvement de l'indicateur de position complémentaire entraine un mouvement du premier indicateur de position et/ou du deuxième indicateur de position.

Selon une caractéristique de l'invention, l'indicateur de position complémentaire comprend au moins un pion.

Selon une caractéristique de l'invention, l'au moins un pion s'étend dans une direction sensiblement parallèle à l'axe de réglage.

Selon une caractéristique de l'invention, l'élongation du premier indicateur de position est reliée à l'élongation du deuxième indicateur de position.

Ainsi, une modification de la position du premier indicateur de position, respectivement du deuxième indicateur de position, entraine une modification de la position du deuxième indicateur de position, respectivement du premier indicateur de position.

Selon une caractéristique de l'invention, l'au moins premier indicateur de position et le deuxième indicateur de position sont mobiles en rotation.

Plus précisément, l'au moins premier indicateur de position et/ou le deuxième indicateur de position comprend un axe de rotation centré par rapport à la zone en amont et la zone en aval. L'axe de rotation de l'au moins premier indicateur de position et/ou le deuxième indicateur de position est donc séparé de l'axe de réglage.

L'invention sera mieux comprise, grâce à la description ci-après, qui se rapporte à plusieurs modes de réalisation selon la présente invention, donné à titre d'exemples non limitatifs et expliqués avec référence aux dessins schématiques annexés, dans lesquels :
- la figure 1 est une représentation vue de dessus d'un dispositif de réglage selon un premier mode de réalisation,
- la figure 2 est une représentation vue de dessous du dispositif de réglage selon le premier mode de réalisation,
- la figure 3 est une vue d'une zone en amont du dispositif de réglage selon le premier mode de réalisation, ledit dispositif de réglage étant intégré dans une manchette,
- la figure 4 est une représentation vue d'une zone en aval du dispositif de réglage selon le premier mode de réalisation, ledit dispositif de réglage étant intégré dans la manchette,
- la figure 5 est une représentation d'un dispositif de réglage selon un deuxième mode de réalisation,
- la figure 6 est une vue latérale du dispositif de réglage selon la figure 5,
- la figure 7 est une vue d'une zone en amont du dispositif de réglage selon la figure 5.

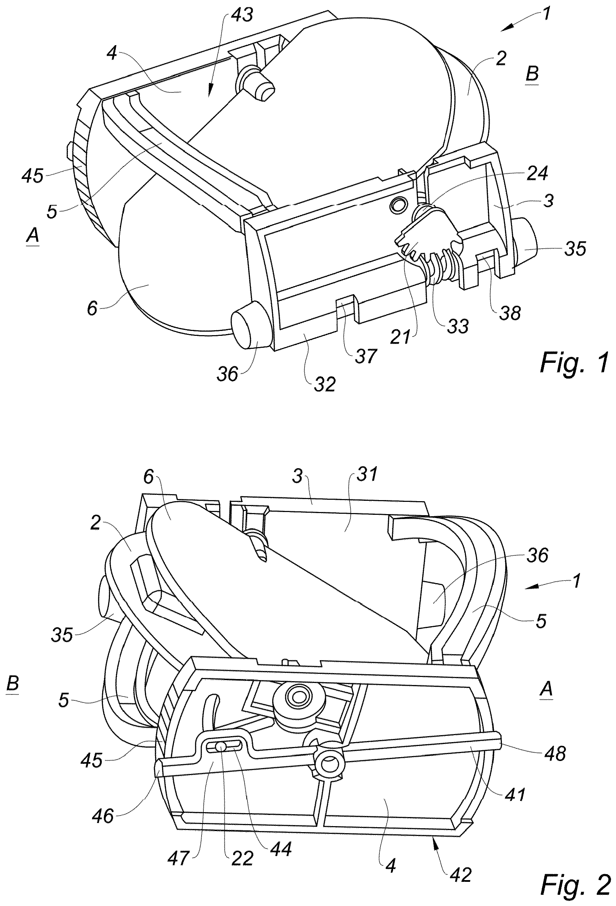

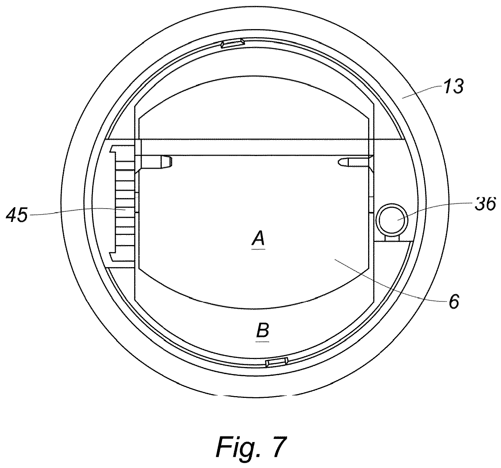

La suite de la description porte sur 2 modes de réalisation d'un dispositif de réglage selon l'invention, en référence aux figures 1 à 7 dans lesquelles les éléments ou organes structurellement ou fonctionnellement identiques ou similaires sont désignés par des références numériques identiques.

Les figures 1 et 2 représentent un dispositif de réglage 1 selon un premier mode de réalisation comprenant un corps dans lequel est monté un clapet de réglage 2.

Le clapet de réglage 2 a une forme sensiblement semi-circulaire, c'est-à-dire en demi-disque. Le clapet de réglage 2 comprend un axe de réglage. Ledit axe de réglage est maintenu au niveau d'une première terminaison 24 par une première embase 3 du corps et au niveau d'une seconde terminaison par une seconde embase 4 du corps. Le clapet de réglage 2 est monté mobile en rotation autour dudit axe de réglage.

Une zone en amont A du corps est une zone comprise entre l'axe de réglage et une première extrémité du dispositif de réglage 1 et une zone en aval B est une zone comprise entre l'axe de réglage et une seconde extrémité du dispositif de réglage 1.

La première embase 3 a une forme sensiblement rectangulaire et comprend une face externe 32 opposée à une face interne 31. La face interne 31 vient au contact de l'axe de réglage du clapet de réglage 2. La première embase 3 s'étend dans un plan normal à l'axe de réglage.

La seconde embase 4 a une forme sensiblement rectangulaire, d'une longueur et d'une largeur sensiblement identique à une longueur et une largeur de la première embase 3. La seconde embase 4 comprend une face externe 42 opposée à une face interne 43. La face interne 43 vient au contact de l'axe de réglage du clapet de réglage 2. La seconde embase 4 s'étend dans un plan normal à l'axe de réglage distinct du plan dans lequel s'étend la première embase 3.

La première embase 3 et la seconde embase 4 définissent un volume dans lequel est compris deux axes de rigidification 5. Les axes de rigidification 5 relient la face interne 31 de la première embase 3 et la face interne 43 de la seconde embase 4. En outre, les axes de rigidification 5 comprennent une partie sensiblement arrondie de manière à faciliter la prise en main du dispositif de réglage 1. Les axes de rigidification 5 déterminent une tenue mécanique du dispositif de réglage 1.

Le dispositif de réglage 1 comprend en outre un volet de régulation 6. Le volet de régulation 6 s'étend suivant un plan. Le volet de régulation 6 a une forme sensiblement circulaire. Le volet de régulation 6 est mobile en rotation autour d'un axe de régulation parallèle et distinct de l'axe de réglage du clapet de réglage 2.

Le clapet de réglage 2 et le volet de régulation 6 sont maintenus dans une position sensiblement parallèle l'un à l'autre par un organe de rappel 7. Ainsi une modification de la position du clapet de réglage 2 entraine une modification de la position du volet de régulation 6.

L'axe de réglage du clapet de réglage 2 est équipé au niveau de la première terminaison 24 de moyens de liaison s'étendant dans un plan sensiblement normal à l'axe de réglage.

Les moyens de liaison comprennent un élément d'entrainement 21 qui a une forme de quart de disque dont un arc est muni de crans.

Les moyens de liaison coopèrent avec un premier organe de commande 35 et avec un deuxième organe de commande 36.

Le premier organe de commande 35 est positionné dans la zone en aval B du dispositif de réglage 1 et le deuxième organe de commande 36 est positionné dans la zone en amont A du dispositif de réglage 1.

Le premier organe de commande 35 et le deuxième organe de commande 36 comprennent chacun une molette de commande mobile en rotation.

Le premier organe de commande 35 et le deuxième organe de commande 36 comprennent chacun un élément d'entrainement complémentaire 37, 38. L'élément d'entrainement complémentaire 38 du premier organe de commande 35 est relié avec l'élément d'entrainement complémentaire 37 du deuxième organe de commande 36.

Par la suite, afin de simplifier la description, on désignera sous le terme d'élément d'entrainement complémentaire 37, 38, l'élément d'entrainement complémentaire 38 du premier organe de commande 35 et du deuxième organe de commande 36.

L'élément d'entrainement complémentaire 37, 38 comprend une cannelure hélicoïdale 33.

L'élément d'entrainement 21 coopère avec un élément d'entrainement complémentaire 37, 38.

Les crans de l'élément d'entrainement 21 sont configurés pour interagir avec la cannelure hélicoïdale 33 de l'élément d'entrainement complémentaire 37, 38, de sorte que lorsqu'un technicien tourne le premier organe de commande 35 ou le deuxième organe de commande 36, l'élément d'entrainement complémentaire 37, 38 tourne autour de son axe d'élongation et l'élément d'entrainement 21 tourne autour de l'axe de réglage. Le clapet de réglage 1 change alors de position.

Les moyens de liaison, le premier organe de commande 35 et le deuxième organe de commande 36 sont positionnés dans une épaisseur de la première embase 3.

Le clapet de réglage 2 comprend également un indicateur de position complémentaire 22 s'étendant selon un axe parallèle à l'axe de réglage.

L'indicateur de position complémentaire 22 comprend un pion coopérant avec un évidement oblong 44 d'une élongation 47 d'un premier indicateur de position 46.

Le premier indicateur de position 46 est positionné dans la zone aval B du dispositif de réglage 1.

Le premier indicateur de position 46 est relié à un deuxième indicateur de position 48 positionné dans la zone amont A du dispositif de réglage 1.

Le deuxième indicateur de position 48 comprend une élongation 41 reliée à l'élongation 47 du premier indicateur de position 46.

Le premier indicateur de position 46 et le deuxième indicateur de position 48 sont montés mobiles en rotation autour d'un axe sensiblement positionné à équidistance de la zone en amont A et de la zone en aval B.

Le premier indicateur de position 46 et le deuxième indicateur de position 48 s'étendent transversalement à l'axe de réglage dans une épaisseur de la seconde embase 4.

La seconde embase 4 comprend sur une première bordure et sur une seconde bordure une échelle de position 45 configurée pour coopérer respectivement avec le premier indicateur de position 46 et le deuxième indicateur de position 48.

Lorsque le clapet de réglage 2 change de position, l'indicateur de position complémentaire 22 change également de position dans un orifice de la seconde embase 4. L'indicateur de position complémentaire 22 inséré dans l'évidement oblong 44 entraine en rotation le premier indicateur de position 46 qui entraine le deuxième indicateur de position 48. Le premier indicateur de position 46 et le deuxième indicateur de position 48 modifient donc leur position par rapport à l'échelle de position 45. De cette manière, le premier indicateur de position 46 et le deuxième indicateur de position 48 indiquent la position du clapet de réglage 2.

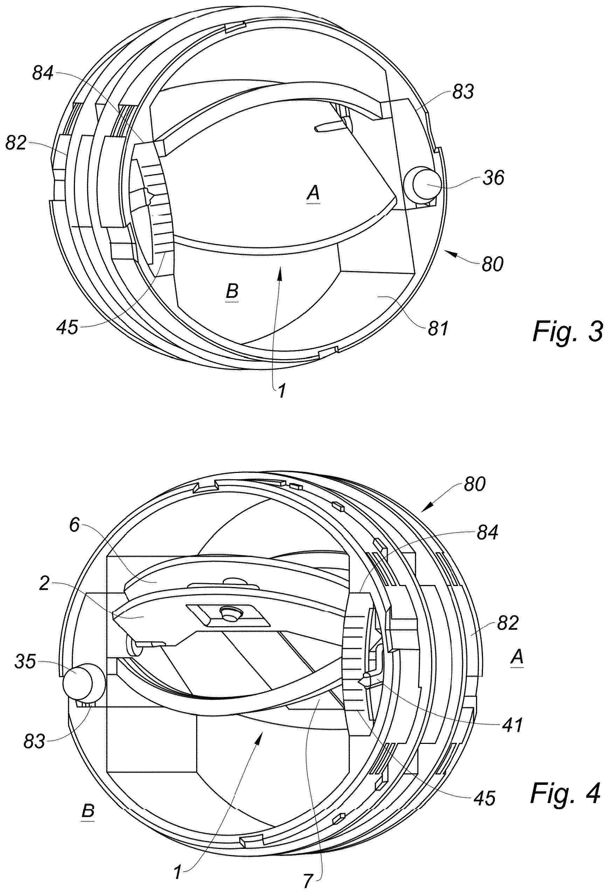

Le dispositif de réglage 1 est conçu pour être inséré directement dans un conduit aéraulique ou dans une manchette 80 telle que cela est illustré en figure 3 et 4.

Lorsqu'un technicien souhaite insérer le dispositif de réglage 1 dans le conduit aéraulique, il prend en main ledit dispositif de réglage 1 puis l'oriente en fonction d'un sens de circulation d'un débit d'air traversant ledit conduit aéraulique.

Il positionne la zone en amont A du dispositif de réglage en regard du débit d'air, c'est-à-dire que le débit rencontre, dans un sens de l'écoulement, la zone en amont A puis la zone en aval B du dispositif de réglage 1.

Le technicien choisit une position du clapet de réglage 2 en fonction du réglage du débit d'air à réaliser. Pour cela, il tourne un des organes de commande 35, 36 de manière à ce que la premier 46 ou le deuxième indicateur de position 48 atteigne la position souhaitée sur l'échelle de position 45.

Le technicien met alors en contact les faces externes 32, 42 de la première embase 3 et de la seconde embase 4 avec une face interne du conduit aéraulique. Des frottements s'exerçant entre les faces externes de la première embase 3 et de la seconde embase 4, et la face interne du conduit aéraulique maintiennent le dispositif de réglage 1 dans le conduit aéraulique.

Le clapet de réglage 2 et le volet de régulation 6 obstruent ainsi partiellement le conduit aéraulique de manière à régler le débit d'air.

Le volet de régulation 6 permet de maintenir un débit sensiblement identique quelles que soient les variations de pression présentes dans le conduit aéraulique.

Lorsque le dispositif de réglage 1 est inséré dans une manchette 80, la manchette 80 est par la suite insérée dans le conduit aéraulique.

La manchette 80 a une forme tubulaire, c'est-à-dire qu'une section de passage est circulaire, comprenant une paroi interne 81 définissant un volume interne de ladite manchette 80 et une paroi externe 82 opposée à la paroi interne 81.

La manchette 80 comprend en outre une première encoche 83, et une seconde encoche 84, dont une longueur et une largeur sont sensiblement égales à une longueur et une largeur de la première embase 3, respectivement de la seconde embase 4, du dispositif de réglage 1 avec lequel elles sont destinées à coopérer.

Lorsque le technicien insère le dispositif de réglage 1 dans la manchette 80, il prend d'une part la manchette 80 et d'autre par le dispositif de réglage 1. Puis il oriente le dispositif de réglage 1 de manière à mettre en regard la première embase 3 avec la première encoche 83 et la seconde embase 4 avec la seconde encoche 84. Ensuite, il glisse le dispositif de réglage 1 dans le volume interne de la manchette 80. Les embases 3, 4 du dispositif de réglage 1 sont alors maintenues dans les encoches 83, 84 de la manchette 80.

Lorsque le dispositif de réglage 1 est inséré dans la manchette 80, le premier organe de commande 35 et le deuxième organe de commande 36 sont accessibles respectivement depuis une première extrémité de la manchette et une seconde extrémité de la manchette.

La manchette 80 est conçue pour être introduite dans un conduit aéraulique de sorte que la face externe 82 soit en contact avec la face interne dudit conduit aéraulique.

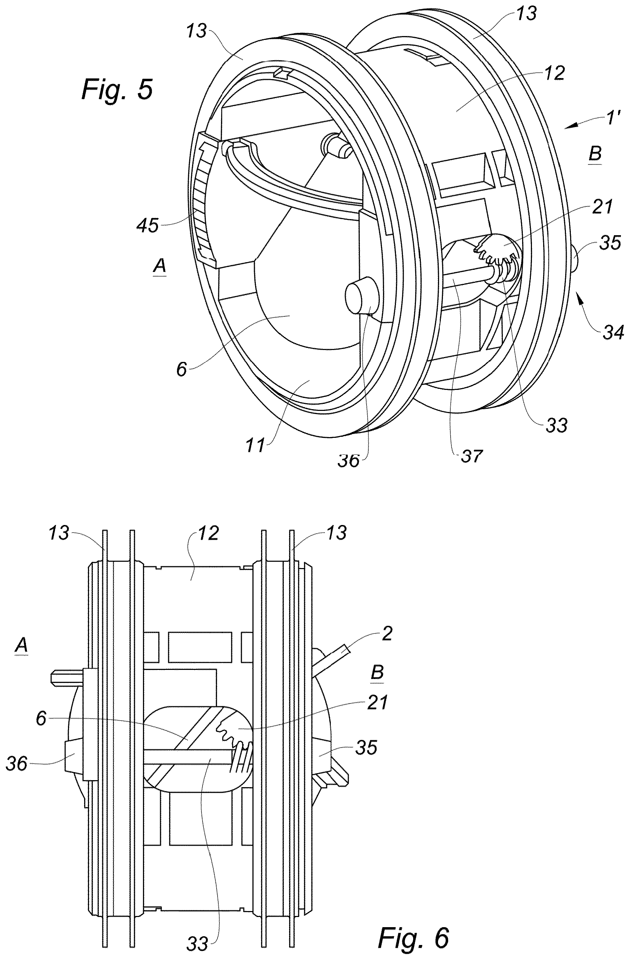

Les figures 5, 6 et 7 représentent un dispositif de réglage 1' selon un second mode de réalisation conçu pour être introduit dans le conduit aéraulique.

Le dispositif de réglage 1' selon le second mode de réalisation diffère du dispositif de réglage 1 en ce qu'il comprend un corps tubulaire dans lequel est fixé un clapet de réglage 2 et un volet de régulation 6.

Le corps tubulaire comprend une paroi interne 11 délimitant un volume interne et une paroi externe 12 opposée à ladite paroi interne 11. Le corps tubulaire permet une tenue mécanique du clapet de réglage 2 et du volet de régulation 6.

Le corps tubulaire comprend également, dans une épaisseur, un premier élément de commande 35 et un deuxième élément de commande 36.

Le corps tubulaire comprend également, dans une épaisseur, un premier indicateur de position, et un deuxième indicateur de position mobile en rotation similaire au premier indicateur de position 46 et au deuxième indicateur de position 48 décrit dans le premier mode de réalisation du dispositif de réglage.

La paroi externe 12 du corps tubulaire comprend 2 joints d'étanchéité 13.

Lorsque le dispositif de réglage 1' est inséré dans un conduit aéraulique de sorte que la face externe 12 soit en contact avec la face interne dudit conduit aéraulique, les joints d'étanchéité 13 permettent que l'ensemble du fluide passe dans le dispositif de réglage 1'.

Le premier organe de commande 35 et le deuxième organe de commande 36 sont accessibles respectivement depuis une première extrémité du dispositif de réglage 1' et une seconde extrémité du dispositif de réglage 1'.

Ainsi le technicien accède à un organe de commande 35, 36 quel que soit le sens d'introduction du dispositif de réglage 1' dans le conduit aéraulique.

Bien entendu, l'invention n'est pas limitée aux modes de réalisation décrits et représentés aux figures annexées. Des modifications restent possibles sans sortir pour autant du domaine de protection de l'invention qui est seulement défini par les revendications ci-jointes.

## Revendications

1. Dispositif de réglage (1, 1') conçu pour régler un débit de fluide s'écoulant dans un conduit, ledit dispositif de réglage (1, 1') comprenant un corps et un clapet de réglage (2) qui est monté dans le corps et qui est mobile en rotation autour d'un axe de réglage, ledit corps comprenant une zone en amont (A) de l'axe de réglage et une zone en aval (B) opposée à la zone en amont (A) par rapport à l'axe de réglage, l'axe de réglage étant équipé de moyens de liaison qui coopèrent avec au moins un premier organe de commande (35) positionné dans la zone en aval (B) et un deuxième organe de commande (36) positionné dans la zone en amont (A),
**caractérisé en ce que**
ledit dispositif de réglage (1, 1') est destiné à être positionné dans ledit conduit selon le sens d'écoulement du fluide, et **en ce que**
le premier organe de commande (35) et le deuxième organe de commande (36) sont configurés de manière à ce qu'une action sur n'importe lequel desdits premier et deuxième organes de commande (35, 36) interagisse avec les moyens de liaison afin de modifier une position du clapet de réglage (2).

2. Dispositif de réglage (1, 1') selon la revendication 1, dans lequel les moyens de liaison comprennent au moins un élément d'entrainement (21) configuré de manière à entrainer en rotation l'axe de réglage.

3. Dispositif de réglage (1, 1') selon la revendication 2, dans lequel l'au moins un élément d'entrainement (21) comprend des crans.

4. Dispositif de réglage (1, 1') selon l'une quelconque des revendications précédentes, dans lequel l'au moins premier organe de commande (35) et le deuxième organe de commande (36) comprennent chacun un élément d'entrainement complémentaire (37, 38) configuré pour coopérer avec l'élément d'entrainement (21).

5. Dispositif de réglage (1, 1') selon la revendication 4, dans lequel l'élément d'entrainement complémentaire (38) du premier organe de commande (35) est relié avec l'élément d'entrainement complémentaire (37) du deuxième organe de commande (36).

6. Dispositif de réglage (1, 1') selon l'une quelconque des revendications 4 ou 5, dans lequel l'élément d'entrainement complémentaire (38) du premier organe de commande (35) et/ou du deuxième organe de commande (36) comprend une cannelure hélicoïdale (33).

7. Dispositif de réglage (1, 1') selon l'une quelconque des revendications précédentes, comprenant au moins un premier indicateur de position (46) positionné dans la zone en aval (B) et un deuxième indicateur de position (48) positionné dans la zone en amont (A).

8. Dispositif de réglage (1, 1') selon la revendication 7, dans lequel l'au moins premier indicateur de position (46) et le deuxième indicateur de position (48) comprennent chacun une élongation (47, 41).

9. Dispositif de réglage (1, 1') selon la revendication 8 dans lequel le clapet de réglage (2) comprend au moins un indicateur de position complémentaire (22) configuré de manière à coopérer avec une élongation (47, 41).

10. Dispositif de réglage (1, 1') selon la revendication 9, dans lequel l'élongation (47) du premier indicateur de position (46) est reliée à l'élongation (41) du deuxième indicateur de position (48).

## Patentansprüche

1. Einstellvorrichtung (1, 1'), die gestaltet ist, um eine Durchflussmenge einer Flüssigkeit einzustellen, die in einer Leitung strömt, wobei die Einstellvorrichtung (1, 1') einen Körper und eine Einstellklappe (2) umfasst, die in dem Körper angebracht ist, und die um eine Einstellachse herum drehbeweglich ist, wobei der Körper eine zur Einstellachse stromaufwärtige Zone (A) und eine zur stromaufwärtigen Zone (A) entgegengesetzte stromabwärtige Zone (B) in Bezug auf die Einstellachse umfasst, wobei die Einstellachse mit Verbindungsmitteln ausgerüstet ist, die mit mindestens einem ersten Steuerungsorgan (35) zusammenwirken, das in der stromabwärtigen Zone (B) positioniert ist, und einem zweiten Steuerungsorgan (36), das in der stromaufwärtigen Zone (A) positioniert ist,
**dadurch gekennzeichnet, dass** die Einstellvorrichtung (1, 1') dazu bestimmt ist, in der Leitung entlang der Strömungsrichtung der Flüssigkeit positioniert zu werden, und dadurch, dass das erste Steuerungsorgan (35) und das zweite Steuerungsorgan (36) derart konfiguriert sind, dass ein Einwirken auf ein beliebiges des ersten und zweiten Steuerungsorgans (35, 36) mit den Verbindungsmitteln interagiert, um eine Position der Einstellklappe (2) zu ändern.

2. Einstellvorrichtung (1, 1') nach Anspruch 1, wobei die Verbindungsmittel mindestens ein Antriebselement (21) umfassen, das derart konfiguriert ist, um die Einstellachse in Drehung anzutreiben.

3. Einstellvorrichtung (1, 1') nach Anspruch 2, wobei das mindestens eine Antriebselement (21) Rasten umfasst.

4. Einstellvorrichtung (1, 1') nach einem der vorstehenden Ansprüche, wobei das mindestens erste Steuerungsorgan (35) und das zweite Steuerungsorgan (36) jeweils ein ergänzendes Antriebselement (37, 38) umfassen, das konfiguriert ist, um mit dem Antriebselement (21) zusammenzuwirken.

5. Einstellvorrichtung (1, 1') nach Anspruch 4, wobei das ergänzende Antriebselement (38) des ersten Steuerungsorgans (35) mit dem ergänzenden Antriebselement (37) des zweiten Steuerungsorgans (36) verbunden ist.

6. Einstellvorrichtung (1, 1') nach einem der Ansprüche 4 oder 5, wobei das ergänzende Antriebselement (38) des ersten Steuerungsorgans (35) und/oder des zweiten Steuerungsorgans (36) eine Spiralnut (33) umfasst.

7. Einstellvorrichtung (1, 1') nach einem der vorstehenden Ansprüche, mindestens einen ersten Positionsanzeiger (46) umfassend, der in der stromabwärtigen Zone (B) positioniert ist, und einen zweiten Positionsanzeiger (48), der in der stromaufwärtigen Zone (A) positioniert ist.

8. Einstellvorrichtung (1, 1') nach Anspruch 7, wobei der mindestens erste Positionsanzeiger (46) und der zweite Positionsanzeiger (48) jeweils eine Verlängerung (47, 41) umfassen.

9. Einstellvorrichtung (1, 1') nach Anspruch 8, wobei die Einstellklappe (2) mindestens einen ergänzenden Positionsanzeiger (22) umfasst, der derart konfiguriert ist, um mit einer Verlängerung (47, 41) zusammenzuwirken.

10. Einstellvorrichtung (1, 1') nach Anspruch 9, wobei die Verlängerung (47) des ersten Positionsanzeigers (46) mit der Verlängerung (41) des zweiten Positionsanzeigers (48) verbunden ist.

## Claims

1. A adjustment device (1, 1') adapted to adjust a flow rate of a fluid flowing in a duct, said adjustment device (1, 1') comprising a body and an adjustment flap (2) which is mounted in the body and which is movable in rotation around an adjustment axis, said body comprising an upstream area (A) of the adjustment axis and a downstream area (B) opposite to the upstream area (A) with respect to the adjustment axis, the adjustment axis being equipped with connecting means which cooperate with at least a first control member (35) positioned in the downstream area (B) and a second control member (36) positioned in the upstream area (A),
**characterized in that**
said adjustment device (1, 1') is intended to be positioned in said duct according to the flow direction of the fluid, and **in that**
the first control member (35) and the second control member (36) are configured such that an action on any of said first and second control members (35, 36) interacts with the connecting means in order to modify a position of the adjustment flap (2).

2. The adjustment device (1, 1') according to claim 1, wherein the connecting means comprise at least one drive element (21) configured so as to drive in rotation the adjustment axis.

3. The adjustment device (1, 1') according to claim 2, wherein the at least one drive element (21) comprises notches.

4. The adjustment device (1, 1') according to any one of the preceding claims, wherein each of the at least first control member (35) and the second control member (36) comprises a complementary drive element. (37, 38) configured to cooperate with the drive element (21).

5. The adjustment device (1, 1') according to claim 4, wherein the complementary drive element (38) of the first control member (35) is connected to the complementary drive element (37) of the second control member (36).

6. The adjustment device (1, 1') according to any one of claims 4 or 5, wherein the complementary drive element (38) of the first control member (35) and/or of the second control member (36) comprises a helical spline (33).

7. The adjustment device (1, 1') according to any one of the preceding claims, comprising at least one first position indicator (46) positioned in the downstream area (B) and a second position indicator (48) positioned in the upstream area (A).

8. The adjustment device (1, 1') according to claim 7, wherein each of the at least one first position indicator (46) and the second position indicator (48) comprises an elongation (47, 41).

9. The adjustment device (1, 1') according to claim 8, wherein the adjustment flap (2) comprises at least one complementary position indicator (22) configured so as to cooperate with an elongation (47, 41).

10. The adjustment device (1, 1') according to claim 9, wherein the elongation (47) of the first position indicator (46) is connected to the elongation (41) of the second position indicator (48).
